# EUROPÄISCHE PATENTSCHRIFT

(11) **EP 4 032 413 B1**
(45) Veröffentlichungstag und Bekanntmachung des Hinweises auf die Patenterteilung: **03.04.2024**
(21) Anmeldenummer: 21204178.4
(22) Anmeldetag: 22.10.2021
(51) Int. Cl.: A23L 33/00, A23P 20/20

(54) **VERFAHREN ZUR HERSTELLUNG EINES NAHRUNGSMITTELS FÜR DYSPHAGIEPATIENTEN UND DANACH ERHÄLTLICHES PRODUKT**
PROCESS FOR MANUFACTURING A FOOD PRODUCT FOR DYSPHAGIA PATIENTS AND PRODUCT RESULTING THEREFROM
PROCÉDÉ DE FABRICATION D'UN ALIMENT POUR PATIENTS DE DYSPHAGIE ET PRODUIT EN RÉSULTANT

(30) Priorität: 12.11.2020 AT 509872020
(43) Veröffentlichungstag der Anmeldung: 27.07.2022
(73) Patentinhaber: Buon vivo Vertriebs GmbH, 1020 Wien (AT)
(72) Erfinder: RICHTER, Nathalie, 3033 Knagg (AT)
(74) Vertreter: Hübscher & Partner Patentanwälte GmbH

(56) Entgegenhaltungen:
- WO-A1-03/055334
- WO-A1-2010/029825
- WO-A1-2017/048190
- WO-A1-2020/099730
- GB-A- 2 386 311
- US-B1- 6 676 986
- HOTALING D L: "NUTRITIONAL CONSIDERATIONS FOR THE PUREED DIET TEXTURE IN DYSPHAGIC ELDERLY", DYSPHAGIA, SPRINGER INTERNATIONAL INC., NEW YORK, NY, US, Bd. 7, Nr. 2, 1. Januar 1992 (1992-01-01), Seiten 81-85, XP009008648,

## Beschreibung

Die Erfindung bezieht sich auf ein Verfahren zur Herstellung eines breiartigen Nahrungsmittels für Dysphagiepatienten mit wenigstens zwei Nahrungsmittelkomponenten, welche zerkleinert werden, wonach sie in ein Behältnis abgefüllt und thermisch sterilisiert werden.

Dysphagie ist eine Krankheit, bei der Patienten eine Schluckstörung aufweisen, weswegen eine Aufnahme von fester Nahrung nur bedingt möglich ist. Um dennoch eine ausgewogene Ernährung für Dysphagiepatienten zu ermöglichen, sind aus dem Stand der Technik spezielle in einem Behälter abgefüllte, breiartige Nahrungsmittel vorbekannt. Solche breiartigen Nahrungsmittel sind jedoch optisch nur wenig ansprechend. Hinzu kommt der wesentliche Nachteil, dass je Behälter nur eine Geschmackssorte etabliert werden kann, was schnell zu einem faden und unabwechslungsreichen Geschmackserlebnis führen kann.

Um diesen Umstand zu umgehen, ist aus der EP1329383B1 ein Babynahrungsmittel mit wenigstens zwei Nahrungsmittelkomponenten bekannt, die vertikal geschichtet in einen Behälter eingefüllt werden. Klassische Babynahrung ist jedoch von Nahrungsmitteln für Dysphagiepatienten aufgrund der unterschiedlichen Nährstoffanforderungsprofile der Konsumenten zu unterscheiden, so müssen Nahrungsmittel für Dysphagiepatienten einen wesentlich dichteren Nährstoffgehalt, daher einen geringeren Wassergehalt, und einen höheren Proteingehalt aufweisen. Der geringere Wassergehalt führt allerdings zu erschwerten Bedingungen beim Einfüllen der Nahrungsmittekomponenten in den Behälter. Eine Erhöhung des Wassergehalts würde wiederum zu einem unerwünschten Ineinanderfließen der unterschiedlichen, verfüllten Nahrungsmittelkomponenten führen. Darüber hinaus ergibt sich der Nachteil, dass vor allem proteindichte Nahrungsmittel, wie Fleisch, bei ungekühlter Lagerung schnell zu einer unschönen Verfärbung neigen.

Aus WO2017/048190A1 ist ein breiartiges Nahrungsmittel für Dysphagiepatienten bekannt. Zur Haltbarmachung wird das Nahrungsmittel nach der Produktion schockgefrostet.

Der Erfindung liegt somit die Aufgabe zugrunde, ein Verfahren der eingangs geschilderten Art vorzuschlagen, das eine ressourcenschonende Erzeugung eines Nahrungsmittels für Dysphagiepatienten erlaubt, welches einerseits eine einfache Abfüllung ermöglicht und andererseits auch nach langer Lagerung bei Raumtemperatur seine Formstabilität und Farbechtheit bewahrt.

Die Erfindung löst die gestellte Aufgabe dadurch, dass jede Nahrungsmittelkomponente in einem separaten Zerkleinerungsschritt auf eine Korngröße von kleiner gleich 400 µm (auf eine Korngröße von wenigstens 40 Mesh), insbesondere von kleiner gleich 210 µm (wenigstens 70 Mesh), und eine Viskosität von 25 - 50 Pas, gemessen mit einer Brookfield Spindel F bei einer Temperatur von 20°C, gebracht wird, wonach die leichter oxidierende Nahrungsmittelkomponente vor der schwerer oxidierenden Nahrungsmittelkomponente in das Behältnis abgefüllt wird und dass zur Erhöhung der Viskosität der Nahrungsmittelkomponenten auf 35 - 750 Pas, gemessen mit einer Brookfield Spindel F bei einer Temperatur von 20°C, die thermische Sterilisation mit einer Temperatur von 115 - 142 °C über eine Dauer von 40 - 70 Minuten erfolgt.

Dadurch, dass die Nahrungsmittelkomponenten jeweils in einem separaten Zerkleinerungsschritt zerkleinert werden, kann jede Nahrungsmittelkomponente auf die Anforderungen eines Dysphagiepatienten angepasst werden. Dabei hat sich herausgestellt, dass Korngrößen der Nahrungsmittelkomponenten von wenigstens 40 Mesh, also Korngrößen kleiner gleich 400 µm, insbesondere von wenigstens 70 Mesh, also kleiner gleich 210 µm besonders einfach für Dysphagiepatienten verzehrbar sind. Da Gemüse, Obst und Fleisch als Nahrungsmittelkomponenten sich in ihrem Zerkleinerungsverhalten voneinander unterscheiden, kann durch den separaten Zerkleinerungsschritt jede Nahrungsmittelkomponente auf die geforderte Korngröße gebracht werden, wodurch erfindungsgemäß auch üblicherweise schwerer zu zerkleinernde Fleischprodukte in verhältnismäßig großen Mengen (Fleischanteil > 30 Gew%) für das Nahrungsmittel eingesetzt werden können. Um ein Vermischen der zerkleinerten Nahrungsmittelkomponenten nach dem Einfüllen in ein verschließbares Behältnis zu verhindern, wird jede Nahrungsmittelkomponente vor dem Abfüllen auf eine Viskosität von 25 - 50 Pas gebracht, was durch die geforderte Korngröße der Nahrungsmittelkomponenten durch die Zerkleinerung selbst erzielt wird oder gegebenenfalls durch Zusatz von für den Fachmann bekannten Bindemitteln vor oder während der Zerkleinerung erfolgen kann. Dieser angestrebte Viskositätsbereich hat den Vorteil, dass einerseits ein Vermischen der unterschiedlichen verfüllten Nahrungsmittelkomponenten untereinander und andererseits ein Entmischen unterschiedlicher Phasen einer Nahrungsmittelkomponente verhindert wird, ohne dabei einen zu großen Fließwiderstand bei der Befüllung durch etwaige Füllvorrichtungen, wie Kolbenfüller, zu verursachen. Beim Verfüllen selbst wird zuerst die leichter oxidierende Nahrungsmittelkomponente und danach in aufsteigender Reihenfolge die jeweils schwerer oxidierenden Nahrungsmittelkomponenten verfüllt, wobei die Nahrungsmittelkomponente die jeweils vorher verfüllte Nahrungsmittelkomponente vollständig überdeckt. Auf diese Weise kann die leichter oxidierende Nahrungsmittelkomponente von Sauerstoffquellen abgeschirmt werden, wodurch eine Farbechtheit der Nahrungsmittelkomponenten auch nach langer Lagerung gewährleistet wird.

Die wenigstens zwei verfüllten, nicht vermischbaren Nahrungsmittelkomponenten werden zur Haltbarmachung anschließend mit einer Temperatur von 115 - 142 °C über eine Dauer von 40 - 70 Minuten sterilisiert. Durch die Dauer von 40 - 70 Minuten wird durch die Sterilisation auch ein vollständiges Durchgaren der Nahrungsmittelkomponenten erreicht, wodurch das Verfahren grundsätzlich nur einen Erhitzungsschritt umfasst und daher besonders ressourcenschonend ist. Zwar würde grundsätzlich eine niedrigere Dauer der Sterilisation genügen, jedoch hat sich überraschenderweise herausgestellt, dass gerade eine Dauer von 40 - 70 Minuten zu einer gewünschten Erhöhung der Viskosität auf 35 - 750 Pas und damit zu einer Sicherung der Formstabilität der einzelnen Nahrungsmittelkomponenten auch während Transportvorgängen führt. Eine besonders hohe Formstabilität kann erreicht werden, wenn die Parameter der thermischen Sterilisation so gewählt werden, dass sich die Viskosität der Nahrungsmittelkomponenten auf 40 - 750 Pas, insbesondere auf 68 bis 750 Pas erhöht. Dies kann wiederum durch Zugabe von Bindemitteln und durch die Temperatur und Dauer der thermischen Sterilisation im erfindungsgemäßen Bereich erzielt werden. Ein bevorzugter Anteil der Bindemittel liegt in einem Bereich von 0,5 - 2,6 Gew%. Unter Nahrungsmittelkomponenten sind dabei Hauptbestandteile des Nahrungsmittels, wie Gemüse, Obst und Fleisch, aber auch bereits vorverarbeitete Produkte wie Tempeh etc. gemeint. Den Hauptbestandteilen können naturgemäß noch weitere Zusätze, wie Gewürze, oder andere im Nahrungsmittelbereich gängige Zutaten hinzugegeben werden. Grundsätzlich ist es denkbar, dass Nahrungsmittel, wie Fleisch vor dem Zerkleinerungsschritt vorgegart werden. Die Angaben der Viskosität entsprechen Messwerte einer Brookfield Spindel F bei einer Temperatur von 20°C.

Zur Beurteilung des unterschiedlichen Oxidationsverhaltens der Nahrungsmittelkomponenten kann der Fachmann grundsätzlich auf seine Erfahrung zurückgreifen. Eine Möglichkeit das Oxidationsverhalten zweier Nahrungsmittel gegenüberzustellen, kann mit einer einfachen Messvorrichtung durchgeführt werden. Die Messvorrichtung weist zwei dichte Kammern auf, in welcher je eine Nahrungsmittelkomponente angeordnet wird. Durch Beaufschlagung jeder Kammer mit einem Gas gleicher Zusammensetzung (beispielsweise Sauerstoff oder Luft) kann die Veränderung unterschiedlicher Paramater in regelmäßigen Intervallen beobachtet und miteinander verglichen werden. Solche Paramater können beispielsweise die Farbe, der Geruch aber auch der Geschmack der Nahrungsmittelkomponenten sein. Jene Nahrungsmittelkomponente, die sich beispielsweise zuerst verfärbt, ist die leichter oxidierende Nahrungsmittelkomponente. Um den Einfluss der Temperatur miteinzubeziehen, können die Kammern temperiert sein.

Um die gewünschten Korngrößen zu erreichen und dabei gleichzeitig die Dauer des Zerkleinerungsschrittes kurz zu halten, wird vorgeschlagen, dass die nicht vorgegarten Nahrungsmittelkomponenten während des Zerkleinerns auf einer Temperatur von 20-28°C gehalten werden. Bei dieser Temperatur werden vorteilhafterweise etwaige eingesetzte Bindemittel nicht aktiviert, sodass eine gewisse Fließfähigkeit zum einfachen Verfüllen der Nahrungsmittelkomponenten aufrechtbleibt. Wie bereits erwähnt, kann bei Nahrungsmittelkomponenten, wie Fleisch, ein Vorgaren in beispielsweise einem Sous-vide-Garer vor dem Zerkleinern stattfinden. Diese Nahrungsmittelkomponenten werden beim Zerkleinern nicht auf 20 - 28°C abgekühlt, sondern im Temperaturbereich der Gartemperatur zerkleinert.

Es hat sich dabei herausgestellt, dass die angestrebten Viskositäten vor und nach dem Sterilisieren auf besonders ressourcenschonende Art und Weise erzielt werden können, wenn den Nahrungsmittelkomponenten vor und/oder während dem Zerkleinern eine Eiweißkomponente zugemischt wird. Die Eiweißkomponente, beispielsweise Milcheiweiß, erhöht die Viskosität bei Zugabe zu einer Nahrungsmittelkomponente zunächst nur geringfügig, sodass beim Verfüllen ein Vermischen mit der anderen Nahrungsmittelkomponente verhindert und dennoch eine geforderte Fließfähigkeit beim Verfüllen aufrechterhalten wird. Erst beim Erhitzen während der Sterilisation wird die Viskosität weiter erhöht, sodass eine Formstabilität auch während eines etwaigen Transportes oder über eine lange Lagerdauer gewährt wird. Die Eiweißkomponente kann bevorzugt in einem Bereich von 1,8 - 2,2 Gew% liegen.

Damit neben der Erhöhung der Nährstoffdichte die Farbechtheit der auch oben aufgeschichteten Nahrungsmittelkomponente verbessert werden kann, empfiehlt es sich, dass die Nahrungsmittelkomponenten durch Zugabe einer Fettkomponente vor und/oder während dem Zerkleinern auf einen Fettgehalt von 10 - 15 Gew% gebracht wird. Ein Fettgehalt in diesem Bereich reicht bei ausreichender Verteilung in den Nahrungsmittelkomponenten aus, um einen Fettfilm um die jeweils verfüllten Nahrungsmittelkomponenten auszubilden, wodurch diese von Sauerstoffquellen abgeschirmt werden und damit eine unerwünschte Oxidation verhindert wird. Bevorzugterweise wird Rapsöl aufgrund seines hohen Anteils an Omega-3-Fettsäuren, die einerseits gesundheitsfördernde Eigenschaften aufweisen und andererseits die Haltbarkeit des Nahrungsmittels auch bei ungekühlter Lagerung verbessern, eingesetzt.

Eine besonders gleichmäßige Verteilung der Fettkomponente und damit gleichmäßige Ausbildung des Fettfilms ergibt sich dabei, wenn der Zerkleinerungsschritt in einem Mikrokutter durchgeführt wird, dessen Schüssel mit 4500 - 5700 Umdrehungen pro Minute rotiert. Bei dieser Rotationsgeschwindigkeit ergibt sich zudem der Vorteil, dass die Zerkleinerung auf die gewünschte Partikelgröße auf besonders schnelle Weise erfolgt, ohne dabei die Nahrungsmittelkomponenten übermäßig zu erhitzen, und somit die Bindefähigkeit etwaiger zugesetzter Bindemittel und Eiweißkomponenten zu beeinträchtigen.

Um zum einen Nahrungsmittel für Dysphagiepatienten mit einem hohen spezifischen Brennwert zu schaffen und zum anderen eine einfache verfahrenstechnische Verarbeitung dieser Nahrungsmittel zu ermöglichen, können vor und/oder während dem Zerkleinerungsschritt die Nahrungsmittelkomponenten auf eine Dichte von 850 bis 1100 g/L eingestellt werden. Diese Dichte hat sich beim Verfüllen der Nahrungsmittelkomponenten mit herkömmlichen Kolbenfüllern als besonders geeignet herausgestellt. Die Dichte kann durch Zugabe von Flüssigkeiten wie Wasser, Milch etc. eingestellt werden.

Um die Nahrungsmittelkomponenten weiter gegen unerwünschte Verfärbungen zu schützen, kann diesen vor und/oder während dem Zerkleinerungsschritt L-Ascorbinsäure hinzugegeben werden. Die L-Ascorbinsäure verbraucht den im verschlossenen Behälter verbleibenden Sauerstoff, wird dabei anstelle der Nahrungsmittelkomponenten oxidiert und verhindert dadurch eine Verfärbung dieser.

Die Erfindung bezieht sich auch auf ein Nahrungsmittel, hergestellt durch ein erfindungsgemäßes Verfahren, mit wenigstens zwei breiartigen, unvermischt in einem Behälter gefüllten und aufbewahrten Nahrungsmittelkomponenten. Damit das Nahrungsmittel problemlos von Dysphagiepatienten verzehrt werden kann und dennoch einen optischen ansprechenden Eindruck auch nach langer ungekühlter Lagerung aufweist, wird vorgeschlagen, dass die Nahrungsmittelkomponenten jeweils eine Korngröße von kleiner gleich 400 µm (eine Korngröße von wenigstens 40 Mesh), insbesondere von kleiner gleich 210 µm (von wenigstens 70 Mesh), und eine Viskosität von 35 - 750 Pas, gemessen mit einer Brookfield Spindel F bei einer Temperatur von 20°C, aufweisen und dass die schwerer zu oxidierende Nahrungsmittelkomponente auf die leichter zu oxidierende Nahrungsmittelkomponente aufgeschichtet ist. Testergebnissen zu folge empfinden Dysphagiepatienten die Korngröße von wenigstens 40 Mesh, insbesondere wenigstens 70 Mesh besonders angenehm beim Verzehr. Durch die geforderte Viskosität der Nahrungsmittelkomponenten von 35 - 750 Pas, vorteilhafterweise von 40 - 750 Pas, insbesondere von 68 bis 750 Pas wird zum einen ein Vermischen unterschiedlicher unvermischt im Behälter aufbewahrter Nahrungsmittelkomponenten und zum anderen eine Synärese der einzelnen Nahrungsmittelkomponenten verhindert. Erfindungsgemäß ist die schwerer oxidierende Nahrungsmittelkomponente auf die leichter oxidierende Nahrungsmittelkomponente aufgeschichtet, überdeckt diese vollständig und schirmt somit die leichter oxidierende Nahrungsmittelkomponente von Sauerstoffquellen ab, wodurch eine Verfärbung der Nahrungsmittelkomponenten verhindert werden kann.

Eine verbesserte Farbechtheit kann außerdem erzielt werden, wenn der Gesamtfettanteil des Nahrungsmittels 10 - 15 Gew% beträgt. Dadurch kann sich ein dünner Fettfilm über die jeweiligen Nahrungsmittelkomponenten bilden, wodurch diese von einer Sauerstoffquelle abgeschirmt werden können. Eine weitere Möglichkeit einer Aufrechterhaltung der Farbechtheit ergibt sich, wenn das Nahrungsmittel mit L-Ascorbinsäure versetzt ist.

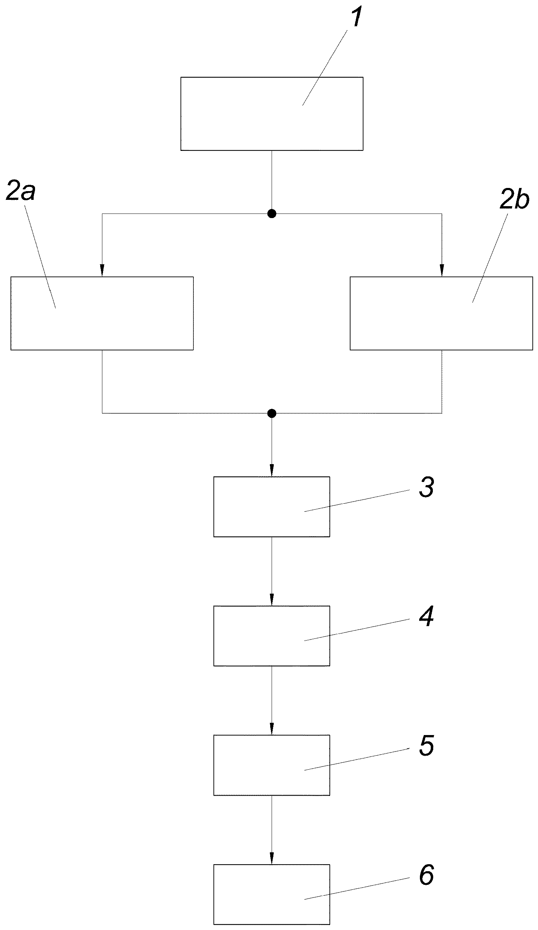

In der Zeichnung ist der Erfindungsgegenstand beispielsweise dargestellt. Die Figur zeigt dabei ein Blockfließbild des erfindungsgemäßen Verfahrens.

Ausführungsbeispiel - Hühnerbrust mit Kürbis:
Im ersten Schritt erfolgt die Bereitstellung der Rohwaren 1. Hierzu wird als erste Nahrungsmittelkomponente 25 kg Hühnerbrust gewürzt und im Sous-Vide-Garer bei 75 - 80°C über einen Zeitraum von 25 - 30 Minuten vorgegart.

Als zweite Nahrungsmittelkomponente werden 25 kg Kürbis mit 6 kg 15% Sahne, 4 kg Frischkäse, 0,5 - 2,0 kg Maisstärke, 1 - 1,5 kg Milcheiweiß, Zitronensaft, Gewürze miteinander vermengt.

Die Hühnerbrust als erste Nahrungsmittelkomponente wird in einem Zerkleinerungsschritt 2a in einen Mikrokutter gegeben und über eine Dauer von 7 - 9 min bei einer Rotationsgeschwindigkeit von 5400 - 5700 Umdrehungen pro Minuten bei Gartemperatur zerkleinert, wodurch eine Viskosität von 25 - 32 Pas (gemessen bei 20°C) erreicht wird.

Die zweite Nahrungsmittelkomponente (Kürbis, Sahne, Frischkäse, Maisstärke, Milcheiweiß, Zitronensaft, Gewürze) wird in einem Zerkleinerungsschritt 2b in einen Mikrokutter gegeben und über eine Dauer von 6 - 8 min bei einer Rotationsgeschwindigkeit von 4500 - 4700 Umdrehungen pro Minuten und in einem Temperaturbereich von 20 - 28 °C zerkleinert und mit 2 - 2,9 kg Rapsöl versetzt, wodurch eine Viskosität von 28 - 35 Pas (gemessen bei 20°C) erreicht wird.

In einem ersten Abfüllschritt 3 wird der Hühnerbrustbrei, also die leichter oxidierende Nahrungsmittelkomponente, in das Behältnis verfüllt, wonach in einem zweiten Abfüllschritt 4 der Kürbisbrei, also die schwerer oxidierende Nahrungsmittelkomponente, in da Behältnis verfüllt wird und somit den Hühnerbrustbrei vollständig überdeckt.

Nach einem Verschließen 5 des Behälters, wird dieser in einem Sterilisationsschritt 6 in einem Rotationsautoklaven bei einer Temperatur von 115 - 142°C über eine Dauer von 40 - 70 Minuten gegart und sterilisiert. Die Viskosität des Hühnerbrustbreis beträgt nach dem sterilisieren ungefähr 620 - 680 Pas und die Viskosität des Kürbisbreis ungefähr 120 - 150 Pas (gemessen bei 20°C). Durch den Anstieg der Viskosität kann eine Formstabilität der Nahrungsmittelkomponenten auch bei Transport und nach langer Lagerung ermöglicht werden.

## Patentansprüche

1. Verfahren zur Herstellung eines breiartigen Nahrungsmittels für Dysphagiepatienten mit wenigstens zwei Nahrungsmittelkomponenten, welche zerkleinert werden, wonach sie in ein Behältnis abgefüllt und thermisch sterilisiert werden, **dadurch gekennzeichnet, dass** jede Nahrungsmittelkomponente in einem separaten Zerkleinerungsschritt (2a,b) auf eine Korngröße von kleiner gleich 400 µm (auf eine Korngröße von wenigstens 40 Mesh), insbesondere von kleiner gleich 210 µm (wenigstens 70 Mesh), und eine Viskosität von 25 - 50 Pas, gemessen mit einer Brookfield Spindel F bei einer Temperatur von 20°C, gebracht wird, wonach die leichter oxidierende Nahrungsmittelkomponente vor der schwerer oxidierenden Nahrungsmittelkomponente in das Behältnis abgefüllt wird und dass zur Erhöhung der Viskosität der Nahrungsmittelkomponenten auf 35 - 750 Pas, gemessen mit einer Brookfield Spindel F bei einer Temperatur von 20°C, die thermische Sterilisation mit einer Temperatur von 115 - 142 °C über eine Dauer von 40 - 70 Minuten erfolgt.

2. Verfahren nach Anspruch 1, **dadurch gekennzeichnet, dass** die Nahrungsmittelkomponenten während des Zerkleinerns auf einer Temperatur von 20-28°C gehalten werden.

3. Verfahren nach Anspruch 1 oder 2, **dadurch gekennzeichnet, dass** den Nahrungsmittelkomponenten vor und/oder während dem Zerkleinern eine Eiweißkomponente zugemischt wird.

4. Verfahren nach einem der Ansprüche 1 bis 3, **dadurch gekennzeichnet, dass** die Nahrungsmittelkomponenten durch Zugabe einer Fettkomponente vor und/oder während dem Zerkleinern auf einen Fettgehalt von 10 - 15 Gew% gebracht wird.

5. Verfahren nach einem der Ansprüche 1 bis 4, **dadurch gekennzeichnet, dass** der Zerkleinerungsschritt in einem Mikrokutter durchgeführt wird, dessen Schüssel mit 4500 - 5700 Umdrehungen pro Minute rotiert.

6. Verfahren nach einem der Ansprüche 1 bis 5, **dadurch gekennzeichnet, dass** vor und/oder während dem Zerkleinerungsschritt die Nahrungsmittelkomponenten auf eine Dichte von 850 bis 1100 g/L eingestellt werden.

7. Verfahren nach einem der Ansprüche 1 bis 6, **dadurch gekennzeichnet, dass** vor und/oder während dem Zerkleinerungsschritt den Nahrungsmittelkomponenten L-Ascorbinsäure hinzugegeben wird.

8. Nahrungsmittel für Dysphagiepatienten, hergestellt durch ein Verfahren nach einem der Ansprüche 1 bis 7, mit wenigstens zwei breiartigen, unvermischt in einem Behälter gefüllten und aufbewahrten Nahrungsmittelkomponenten, **dadurch gekennzeichnet, dass** die Nahrungsmittelkomponenten jeweils eine Korngröße von kleiner gleich 400 µm (eine Korngröße von wenigstens 40 Mesh), insbesondere von kleiner gleich 210 µm (von wenigstens 70 Mesh), und eine Viskosität von 35 - 750 Pas, gemessen mit einer Brookfield Spindel F bei einer Temperatur von 20°C, aufweisen und dass die schwerer oxidierende Nahrungsmittelkomponente auf die leichter oxidierende Nahrungsmittelkomponente aufgeschichtet ist.

9. Nahrungsmittels für Dysphagiepatienten nach Anspruch 8, **dadurch gekennzeichnet, dass** der Gesamtfettanteil 10 - 15 Gew% beträgt.

## Claims

1. Process for the preparation of a pulpy food product for patients with dysphagia with at least two food components, which are comminuted, after which they are filled into a container and thermally sterilised, **characterised in that** each food component is brought - in a separate comminution step (2a, b) - to a particle size of less than or equal to 400 µm (to a particle size of at least 40 mesh), in particular of less than or equal to 210 µm (at least 70 mesh), and a viscosity of 25 - 50 Pas, measured with a Brookfield Spindle F at a temperature of 20°C, after which the more easily oxidising food component is filled into the container before the less easily oxidising food component, and that, in order to increase the viscosity of the food components to 35 - 750 Pas, measured with a Brookfield Spindle F at a temperature of 20°C, the thermal sterilisation is carried out at a temperature of 115 - 142°C for a period of 40 - 70 minutes.

2. Process according to claim 1, **characterised in that** the food components are kept at a temperature of 20-28°C during comminution.

3. Process according to claim 1 or 2, **characterised in that** a protein component is added to the food components before and/or during the comminution.

4. Process according to one of claims 1 to 3, **characterised in that** the food components are brought to a fat content of 10-15% by weight by adding a fat component before and/or during comminution.

5. Process according to one of claims 1 to 4, **characterised in that** the comminution step is carried out in a microcutter, the bowl of which rotates at 4500 - 5700 revolutions per minute.

6. Process according to one of claims 1 to 5, **characterised in that** before and/or during the comminution step, the food components are adjusted to a density of 850 to 1100 g/L.

7. Process according to one of claims 1 to 6, **characterised in that** L-ascorbic acid is added to the food components before and/or during the comminution step.

8. Food for dysphagia patients, prepared by a method according to one of claims 1 to 7, comprising at least two pulpy food components filled and stored unmixed in a container, **characterised in that** the food components each have a particle size of less than or equal to 400 µm (a particle size of at least 40 mesh), in particular of less than or equal to 210 µm (of at least 70 mesh), and a viscosity of 35 - 750 Pas, measured with a Brookfield Spindle F at a temperature of 20°C, and **in that** the less easily oxidising food component is layered on top of the more easily oxidising food component.

9. Food for dysphagia patients according to claim 8, **characterised in that** the total fat content is 10 - 15% by weight.

## Revendications

1. Procédé pour fabriquer un aliment de type bouillie pour patients dysphagiques, comprenant au moins deux composants alimentaires qui sont broyés, après quoi ils sont introduits dans un récipient et stérilisés thermiquement, **caractérisé en ce que** chaque complément alimentaire est porté, dans une étape de broyage (2a, b) séparée, à une granulométrie inférieure ou égale à 400 µm (à une granulométrie d'au moins 40 mesh), en particulier inférieure ou égale à 210 µm (au moins 70 mesh), et à une viscosité, mesurée avec une tige Brookfield F à une température de 20 °C, de 25 à 50 Pas, après quoi le composant alimentaire oxydant le plus léger est introduit dans le récipient avant le composant alimentaire oxydant le plus lourd, et que, pour porter la viscosité des composants alimentaires, mesurée avec une tige Brookfield F à une température de 20 °C, entre 35 et 750 Pas, la stérilisation thermique a lieu à une température de 115 à 142 °C pendant une durée de 40 à 70 minutes.

2. Procédé selon la revendication 1, **caractérisé en ce que** les composants alimentaires sont maintenus à une température de 20 à 28 °C pendant le broyage.

3. Procédé selon la revendication 1 ou 2, **caractérisé en ce qu'**un composant protéique est mélangé aux composants alimentaires avant et/ou pendant le broyage.

4. Procédé selon une des revendications 1 à 3, **caractérisé en ce que** les composants alimentaires sont portés à une teneur en matière grasse de 10 à 15% en poids par l'ajout d'un composant gras avant et/ou pendant le broyage.

5. Procédé selon une des revendications 1 à 4, **caractérisé en ce que** l'étape de broyage est réalisée dans un micro-cutter dont le bol tourne à une vitesse de 4500 à 5700 tours/minute.

6. Procédé selon une des revendications 1 à 5, **caractérisé en ce que** les composants alimentaires sont portés à une densité de 850 à 1100 g/l avant et/ou pendant l'étape de broyage.

7. Procédé selon une des revendications 1 ou 6, **caractérisé en ce que** de l'acide ascorbique L est ajouté aux composants alimentaires avant et/ou pendant l'étape de broyage.

8. Aliment pour patients dysphagiques, fabriqué par un procédé selon une des revendications 1 à 7, comprenant au moins deux composants alimentaires de type bouillie introduits séparément dans un récipient et conservés, **caractérisé en ce que** les compléments alimentaires présentent chacun une granulométrie inférieure ou égale à 400 µm (une granulométrie d'au moins 40 mesh), en particulier inférieure ou égale à 210 µm (au moins 70 mesh), et une viscosité de 35 à 750 Pas, mesurée avec une tige Brookfield F à une température de 20 °C, et que le composant alimentaire s'oxydant le plus est déposé sur l'aliment s'oxydant le moins.

9. Aliment pour patients dysphagiques selon la revendication 8, **caractérisé en ce que** la teneur totale en matière grasse est de 10 à 15% en poids.
